# EUROPEAN PATENT APPLICATION

(11) **EP 4 213 442 A1**
(43) Date of publication of application: **19.07.2023**
(21) Application number: 23150429.1
(22) Date of filing: 05.01.2023
(51) Int. Cl.: H04L 9/40, H04W 40/02, H04W 48/18, H04W 84/04, H04W 84/10

(54) **URSP PROVISIONING FOR CREDENTIALS HOLDER SCENARIOS**

(30) Priority: 18.01.2022 US 202263300275 P; 18.01.2022 US 202263300277 P; 20.12.2022 US 202218085395
(71) Applicant: MediaTek Inc., Hsinchu City 30078 (TW)
(72) Inventor: LAI, Chia-Lin, 30078 Hsinchu City (TW); LIN, Yuan-Chieh, 30078 Hsinchu City (TW)
(74) Representative: Habermann, Hruschka & Schnabel

(57) **Abstract**

A method of provisioning UE Route Selection Policy (URSP) rules received from a non-subscribed Stand-alone Non-public Network (SNPN) registered using credentials from a credentials holder (CH) is provided. After a UE register to the non-subscribed SNPN using credentials from the CH, the UE may establish a PDU session for accessing services in the SNPN. Prior to establishing the PDU session, the UE checks the corresponding URSP rules that can be used in the SNPN. If the UE is signaled with URSP rules by the registered non-subscribed SNPN, UE should store the URSP rules and then apply those URSP rules for PDU session establishment when the UE access the services in the non-subscribed SNPN.

## Description

### CROSS REFERENCE TO RELATED APPLICATIONS

This application claims priority under 35 U.S.C. §119 from U.S. Provisional Application Number 63/300,275, entitled "URSP provisioning for Credentials Holder scenario", filed on January 18, 2022; U.S. Provisional Application Number 63/300,277, entitled "URSP handling for Credentials Holder scenario", filed on January 18, 2022, the subject matter of which is incorporated herein by reference.

### TECHNICAL FIELD

The disclosed embodiments relate generally to wireless mobile communication network, and, more particularly, to method of provisioning and handling of UE Route Selection Policy (URSP) for UEs registered in a non-subscribed Stand-alone non-public network (SNPN) using credentials from a credentials holder (CH).

### BACKGROUND

A Public Land Mobile Network (PLMN) is a network established and operated by an administration or recognized operating agency (ROA) for the specific purpose of providing land mobile communication services to the public. PLMN provides communication possibilities for mobile users. A PLMN may provide service in one or a combination of frequency bands. Access to PLMN services is achieved by means of an air interface involving radio communications between mobile phones and base stations with integrated IP network services. One PLMN may include multiple radio access networks (RAN) utilizing different radio access technologies (RAT) for accessing mobile services. A radio access network is part of a mobile communication system, which implements a radio access technology. Conceptually, RAN resides between a mobile device and provides connection with its core network (CN). Depending on the standard, mobile phones and other wireless connected devices are varyingly known as user equipment (UE), terminal equipment, mobile stations (MS), etc. Examples of different RATs include 2G GERAN (GSM) radio access network, 3G UTRAN (UMTS) radio access network, 4G E-UTRAN (LTE), 5G new radio (NR) radio access network, and other non-3GPP access RAT including WiFi.

As compared to PLMN, a non-public network (NPN) is a 5GS deployed network for non-public use. An NPN is either a Stand-alone Non-Public Network (SNPN), i.e., operated by an NPN operator and not relying on network functions provided by a PLMN; or a Public Network Integrated NPN (PNI-NPN), i.e., a non-public network deployed with the support of a PLMN. The combination of a PLMN ID and Network identifier (NID) identifies an SNPN. A UE may be enabled for SNPN. The UE selects an SNPN for which it is configured with a subscriber identifier and credentials. The UE can have several sets of subscriber identifiers, credentials, and SNPN identities.

The 5G system enables an NPN to request a third-party service provider to perform NPN authentication of a UE based on identities and/or credentials supplied by the third-party service provider. The 5G system enables an NPN to request a PLMN to perform NPN authentication of a UE based on identities and/or credentials supplied by the PLMN. A 5G system enables an SNPN to be able to request another SNPN (third-party service provider) to perform SNPN authentication of a UE based on identities and/or credentials supplied by the other SNPN (the third-party service provider). Specifically, an SNPN-enabled UE can support access to an SNPN using credentials from a credential holder (CH).

UE Route Selection Policy (URSP) is used by the UE to determine how to route outgoing traffic. HPLMN or SNPN provision the UE with the URSP rules by pre-configuration or by signaling when UE registers to HPLMN/VPLMN or when UE registers to the SNPN to which UE has subscription to register. UE uses those URSP rules to establish the PDU sessions for the applications for accessing services. However, it is unclear on how to provision URSP rules to UE under CH scenarios, i.e., when UE accesses an SNPN using credentials from CH. Therefore, when UE wants to establish PDU session for the application after UE accesses and registers to an SNPN using credentials from CH, no URSP rules are found to be used.

Further, when UE wants to establish PDU session for the application in the PLMN, UE uses URSP rules by the order: 1) Signaled URSP rules provided by PCF of the PLMN, 2) Pre-configured URSP rules provided by the PLMN, and 3) Local configuration if neither pre-configured URSP rules nor signaled URSP rules are found. When UE wants to establish PDU session for the application in the SNPN, UE uses URSP rules by the order: 1) Signaled URSP rules provided by PCF of the SNPN(s), 2) Pre-configured URSP rules provided by the SNPN(s), 3) Local configuration if neither pre-configured URSP rules nor signaled URSP rules are found. However, there is no order specified for UE to use URSP rules provided by the registered non-subscribed SNPN using credentials from CH.

Solutions are sought.

### SUMMARY

In accordance with one novel aspect, a method of provisioning UE Route Selection Policy (URSP) rules received from a non-subscribed Stand-alone Non-public Network (SNPN) registered using credentials from a credentials holder (CH) is provided. After a UE register to the non-subscribed SNPN using credentials from the CH, the UE may establish a PDU session for accessing services in the SNPN. Prior to establishing the PDU session, the UE checks the corresponding URSP rules that can be used in the SNPN. If the UE is signaled with URSP rules by the registered non-subscribed SNPN, UE should store the URSP rules and then apply those URSP rules for PDU session establishment when the UE access the services in the non-subscribed SNPN.

In one embodiment, a UE selects a non-subscribed stand-alone non-public network (SNPN), wherein the UE is enabled to access to the non-subscribed stand-alone non-public network (SNPN) using credentials from a credentials holder. The UE registers to the non-subscribed SNPN using the credentials supplied by the credentials holder. The UE receives a first set of UE Route Selection Policy (URSP) rules from the non-subscribed SNPN. The UE establishes a protocol data unit (PDU) session based on the first set of URSP rules from the non-subscribed SNPN.

In accordance with another novel aspect, a method of handling URSP rules received from a non-subscribed SNPN registered using credentials from a CH is provided. UE may be pre-configured with URSP rules by UE home network or UE may first registers to a home network and obtain signaled URSP rules from the home network. Later on, UE may register to a non-subscribed SNPN using credentials from a CH. Before establishing a PDU session, UE checks the corresponding URSP rules that can be used in the SNPN. If UE is signaled with URSP rules by the registered non-subscribed SNPN, then UE can use URSP rules in the following priority order : 1) URSP rules signaled from the non-subscribed SNPN, 2) URSP rules signaled from the home network, and 3) URSP rules pre-configured by the home network.

In another embodiment, a UE obtains a first set of UE Route Selection Policy (URSP) rules from a non-subscribed stand-alone non-public network (SNPN), wherein the UE registers to the non-subscribed SNPN using credentials from a credentials holder. The UE maintains a second set of URSP rules from a home network by the UE. The UE determines that the first set of URSP rules has a higher priority than the second set of URSP rules. The UE establishes a protocol data unit (PDU) session based on the first set of URSP rules obtained from the non-subscribed SNPN.

Other embodiments and advantages are described in the detailed description below. This summary does not purport to define the invention. The invention is defined by the claims.

### BRIEF DESCRIPTION OF THE DRAWINGS

Figure 1 schematically shows a communication system having a Stand-alone Non-public Network (SNPN) and an SNPN-enabled UE that supports access to an SNPN using credentials from a Credentials Holder (CH) and UE Route Selection Policy (URSP) provisioning and handling in accordance with one novel aspect.
Figure 2 illustrates simplified block diagrams of a user equipment and a network entity in accordance with embodiments of the current invention.
Figure 3 illustrates the content of a URSP rule as defined in 3GPP specification and URSP rule provisioning and handling in accordance with one novel aspect.
Figure 4 illustrates an embodiment of a UE supporting access to an SNPN using credentials from a credential holder and corresponding URSP provisioning in accordance with one novel aspect.
Figure 5 illustrates an embodiment of a UE supporting access to an SNPN using credentials from a credential holder and corresponding URSP handling in accordance with one novel aspect.
Figure 6 is a flow chart of a method of provisioning URSP rules from a non-subscribed SNPN registered using credentials from CH in accordance with one novel aspect of the present invention.
Figure 7 is a flow chart of a method of handling URSP rules from a non-subscribed SNPN registered using credentials from CH in accordance with one novel aspect of the present invention.

### DETAILED DESCRIPTION

Reference will now be made in detail to some embodiments of the invention, examples of which are illustrated in the accompanying drawings.

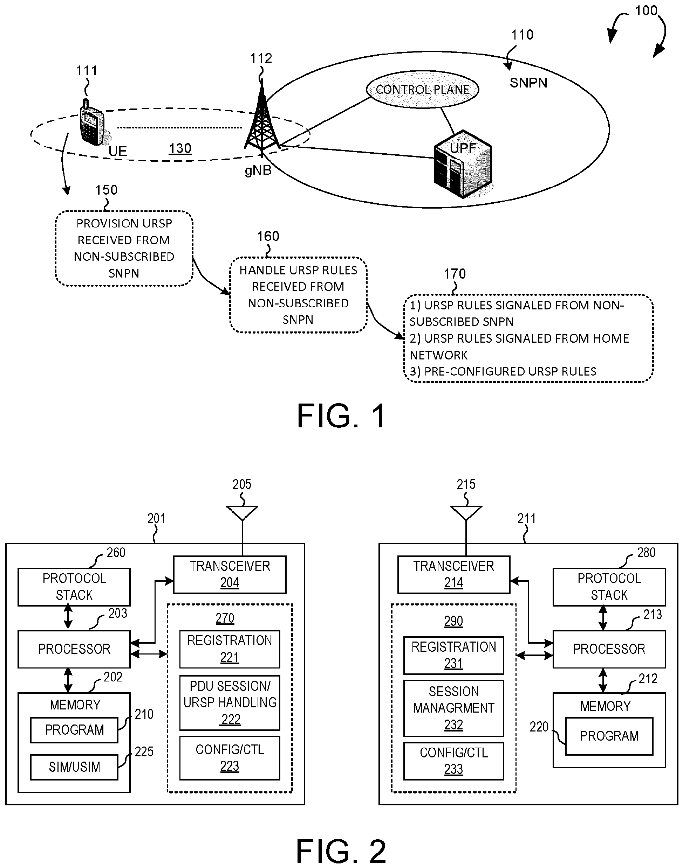

Figure 1 schematically shows a communication system having a Stand-alone Non-public Network (SNPN) 110 and an SNPN-enabled User Equipment (UE) 111 that supports access to an SNPN using credentials from a Credentials Holder (CH) and UE Route Selection Policy (URSP) provisioning and handling in accordance with one novel aspect. SNPN network 110 comprises control plane functionalities, user plane functionality (UPF), and application servers that provides various services by communicating with a plurality of user equipments (UEs) including UE 111. UE 111 and its serving base station gNB 112 belong to part of a radio access network RAN 130. RAN 130 provides radio access for UE 111 via a radio access technology (RAT), e.g., 3GPP access and non-3GPP access. An access and mobility management function (AMF) in SNPN 110 communicates with gNB 112. UE 111 may be equipped with a radio frequency (RF) transceiver or multiple RF transceivers for different application services via different RATs.

The 5G system enables an NPN to request a third-party service provider to perform NPN authentication of a UE based on identities and/or credentials supplied by the third-party service provider. The 5G system enables an NPN to request a PLMN to perform NPN authentication of a UE based on identities and/or credentials supplied by the PLMN. A 5G system enables an SNPN to be able to request another SNPN (third-party service provider) to perform SNPN authentication of a UE based on identities and/or credentials supplied by the other SNPN (the third-party service provider). Specifically, an SNPN-enabled UE can support access to an SNPN using credentials from a credentials holder (CH). Such UE can be configured with "a list of subscriber data" containing one or more entries. Each entry of the list consists of SNPN selection parameters for the purpose of access to an SNPN using credentials from the CH.

UE Route Selection Policy (URSP) is used by the UE to determine how to route outgoing traffic. HPLMN or SNPN provision the UE with the URSP rules by pre-configuration or by signaling when UE registers to HPLMN/VPLMN or when UE registers to the SNPN to which UE has subscription to register. UE uses those URSP rules to establish the PDU sessions for the applications for accessing services. However, it is unclear on how to provision URSP rules to UE under CH scenarios, i.e., when UE accesses a non-subscribed SNPN using credentials from CH. Therefore, when UE wants to establish PDU session for the application after UE accesses and registers to a non-subscribed SNPN using credentials from CH, sometimes no URSP rules are found to be used by the UE.

In accordance with one novel aspect, a method of provisioning URSP rules received from a non-subscribed SNPN registered using credentials from a CH is provided (150). After UE 111 registers to the non-subscribed SNPN 110 using credentials from a CH, UE 111 may establish a PDU session for accessing services in the SNPN. Prior to establishing the PDU session, UE 111 checks the corresponding URSP rules that can be used in the SNPN. If UE 111 is signaled with URSP rules by the registered non-subscribed SNPN, UE 111 should store the URSP rules and then apply those URSP rules for PDU session establishment.

When UE wants to establish PDU session for the application in the PLMN, UE uses URSP rules by the order: 1) Signaled URSP rules provided by PCF of the PLMN, 2) Pre-configured URSP rules provided by the PLMN, and 3) Local configuration if neither pre-configured URSP rules nor signaled URSP rules are found. When UE wants to establish PDU session for the application in the SNPN, UE uses URSP rules by the order: 1) Signaled URSP rules provided by PCF of the SNPN(s), 2) Pre-configured URSP rules provided by the SNPN(s), 3) Local configuration if neither pre-configured URSP rules nor signaled URSP rules are found. However, there is no order specified for UE to use URSP rules provided by the registered non-subscribed SNPN using credentials from CH.

In accordance with another novel aspect, a method of handling URSP rules received from a non-subscribed SNPN registered using credentials from a CH is provided (160). UE 111 may be pre-configured with URSP rules by UE home network or UE 111 may first registers to a home network and obtain signaled URSP rules from the home network. Later on, UE 111 may register to a non-subscribed SNPN using credentials from a CH. Before establishing a PDU session, UE 111 checks the corresponding URSP rules that can be used in the SNPN. If UE 111 is signaled with URSP rules by the registered non-subscribed SNPN, then UE 111 can use URSP rules in the following priority order (170): 1) URSP rules signaled from the non-subscribed SNPN, 2) URSP rules signaled from the home network, and 3) URSP rules pre-configured by the home network. The home network can be a PLMN or another subscribed SNPN.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes a set of control functional modules and circuit 290. Registration circuit 231 handles registration and mobility procedure. Session management circuit 232 handles session management functionalities. Configuration and control circuit 233 provides different parameters to configure and control UE.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an MME or an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, system modules and circuits 270 comprise registration circuit 221 that performs registration and mobility procedure with the network, a PDU session and URSP handling circuit 222 that handles PDU session establishment procedure, the URSP provisioning, priority, and rule matching, and a config and control circuit 223 that handles configuration and control parameters related to SNPN selection, registration, and URSP rule managing, etc..

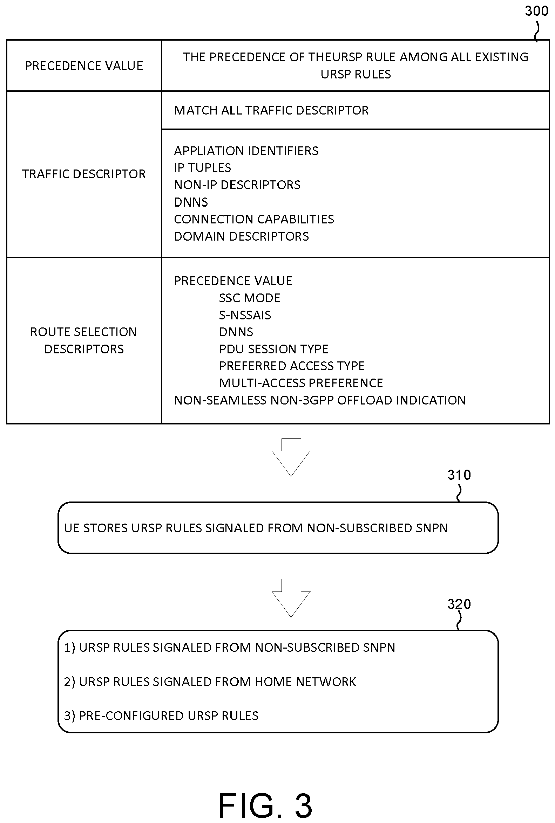

Figure 3 illustrates the content of a URSP rule as defined in 3GPP specification and URSP rule provisioning and handling in accordance with one novel aspect. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor; and 3) one or more route selection descriptors. The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s). Each route selection descriptor includes a precedence value of the route selection descriptor and either 1) one PDU session type and, optionally, one or more of the followings: A) SSC mode; B) one or more S-NSSAIs; C) one or more DNNs; D) preferred access type; and E) multi-access preference; or 2) non-seamless non-3GPP offload indication. Only one URSP rule in the URSP can be a default URSP rule and the default URSP rule should contain a match-all traffic descriptor. If a default URSP rule (i.e., a URSP rule with the "match all" Traffic descriptor) and one or more non-default URSP rules (i.e., URSP rules without the "match all" Traffic descriptor) are included in the URSP, any non-default URSP rule should have lower precedence value (i.e., higher priority) than the default URSP rule.

When UE wants to establish PDU session for the application in the PLMN or in the SNPN, UE uses URSP rules by the order: 1) Signaled URSP rules provided by PCF of the PLMN or SNPN, 2) Pre-configured URSP rules provided by the PLMN or SNPN, and 3) Local configuration if neither pre-configured URSP rules nor signaled URSP rules are found. When UE is registered to a non-subscribed SNPN using credentials provided by a CH, UE may receive URSP provisioning that is signaled from the non-subscribed SNPN. In response, UE will store the signaled URSP rules to be used later (310), e.g., when establishing a PDU session in the non-subscribed SNPN. Further, if UE is provisioned with other URSP rules from the home network, then UE can use URSP rules in the following priority order (320): 1) URSP rules signaled from the non-subscribed SNPN, 2) URSP rules signaled from the home network, and 3) URSP rules pre-configured by the home network.

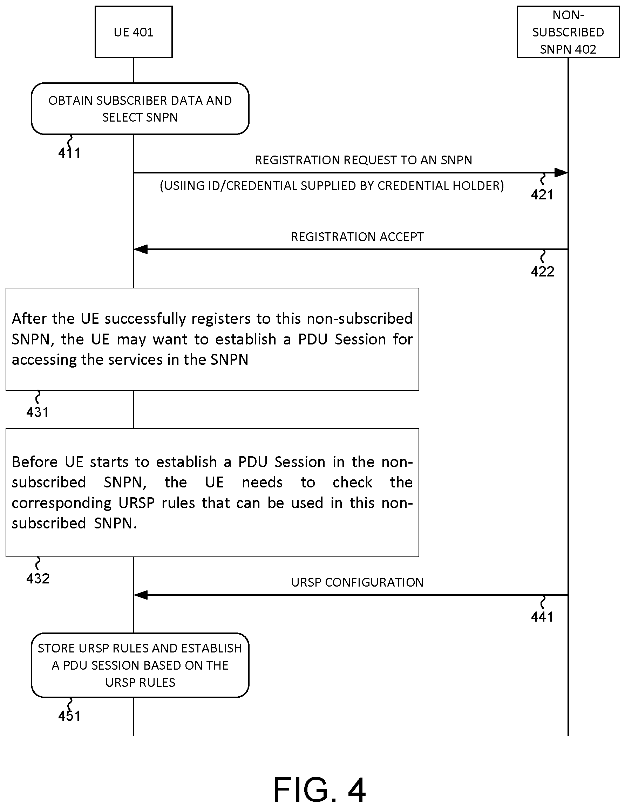

Figure 4 illustrates an embodiment of a UE 401 supporting access to a non-subscribed SNPN 402 using credentials from a credential holder and corresponding URSP provisioning in accordance with one novel aspect. In step 411, UE 401 obtains configuration of a list of subscriber data, e.g., configured by the network. UE 401 selects a non-subscribed SNPN 402 according to an SNPN selection procedure. In step 421, UE 401 sends a registration request message to the selected non-subscribed SNPN 402. The UE uses credentials supplied by the credential holder, which is either a PLMN or another SNPN, for the registration. In step 422, upon verifying the registration credentials, UE 401 receives a registration accept and is successfully registered to SNPN 402.

After UE 401 successfully registers to the non-subscribed SNPN 402, the UE may want to establish a PDU Session for accessing the services in the SNPN 402 (431). Before UE 401 starts to establish a PDU Session in the non-subscribed SNPN, the UE needs to check the corresponding URSP rules that can be used in this non-subscribed SNPN (432). In step 441, UE 401 receives URSP configuration, e.g., a set of URSP rules signaled from the non-subscribed SNPN 402. Accordingly, UE 401 stores the URSP rules. In step 451, UE 401 establishes a PDU session based on the stored URSP rules that is signaled by the non-subscribed SNPN 402. Note that traditionally, UE may reject URSP rules received from a non-subscribed SNPN. However, when the UE registers to the non-subscribed SNPN using credentials from CH, the UE is considered as subscriber of the registered non-subscribed SNPN. Furthermore, the non-subscribed SNPN should have entire view on which services can be accessed by the UE than UE home network in the non-subscribed SNPN. Therefore, the URSP rules provisioned by the non-subscribed SNPN should be more suitable than those provisioned by UE home network.

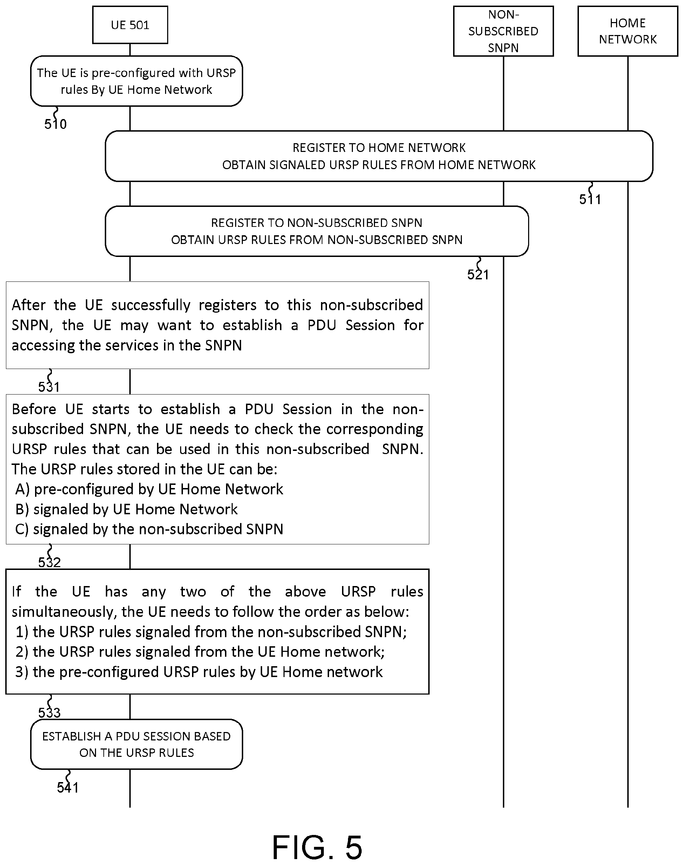

Figure 5 illustrates an embodiment of a UE supporting access to an SNPN using credentials from a credential holder and corresponding URSP handling in accordance with one novel aspect. In Step 510, UE 501 may be pre-configured with URSP rules by UE home network. In step 511, UE 501 registers to a home network, and obtains/stores URSP configuration, e.g., URSP rules signaled from the home network. In step 521, UE 501 selects a non-subscribed SNPN based on SNPN selection procedure and registers to a non-subscribed SNPN using credentials provided by a credentials holder. UE 501 also obtains/stores URSP configuration, e.g., URSP rules signaled from the non-subscribed SNPN. After UE 501 successfully registers to this non-subscribed SNPN, UE 501 may want to establish a PDU Session for accessing the services in the SNPN (531).

Before UE 501 starts to establish a PDU Session in the non-subscribed SNPN, UE 501 needs to check the corresponding URSP rules that can be used in this non-subscribed SNPN. The URSP rules stored in the UE can be any of the following: A) pre-configured by UE Home Network, B) signaled by UE Home Network, and/or C) signaled by the non-subscribed SNPN (532). If the UE has any two of the above URSP rules simultaneously, then the UE needs to follow the order as below: 1) the URSP rules signaled from the non-subscribed SNPN; 2) the URSP rules signaled from the UE Home network; and 3) the pre-configured URSP rules by UE Home network (533). Accordingly, UE 501 selects the URSP rules with the highest priority. In step 541, UE 501 establishes a PDU session based on the selected URSP rules with the top priority. Since the non-subscribed SNPN have the entire knowledge which services can be available and accessed by the UE, the URSP rules provisioned by the non-subscribed SNPN is more suitable for the UE for access the services provided by the non-subscribed SNPN.

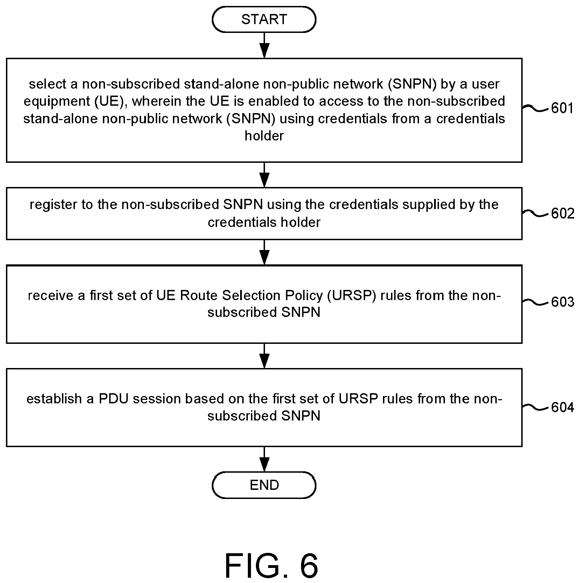

Figure 6 is a flow chart of a method of provisioning URSP rules from a non-subscribed SNPN registered using credentials from CH in accordance with one novel aspect of the present invention. In step 601, a UE selects a non-subscribed stand-alone non-public network (SNPN), wherein the UE is enabled to access to the non-subscribed stand-alone non-public network (SNPN) using credentials from a credentials holder. In step 602, the UE registers to the non-subscribed SNPN using the credentials supplied by the credentials holder. In step 603, the UE receives a first set of UE Route Selection Policy (URSP) rules from the non-subscribed SNPN. In step 604, the UE establishes a protocol data unit (PDU) session based on the first set of URSP rules from the non-subscribed SNPN.

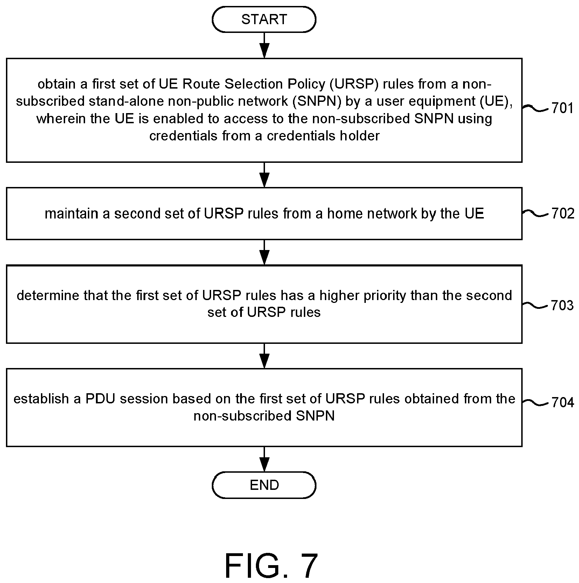

Figure 7 is a flow chart of a method of handling URSP rules from a non-subscribed SNPN registered using credentials from CH in accordance with one novel aspect of the present invention. In step 701, a UE obtains a first set of UE Route Selection Policy (URSP) rules from a non-subscribed stand-alone non-public network (SNPN), wherein the UE registers to the non-subscribed SNPN using credentials from a credentials holder. In step 702, the UE maintains a second set of URSP rules from a home network by the UE. In step 703, the UE determines that the first set of URSP rules has a higher priority than the second set of URSP rules. In step 704, the UE establishes a protocol data unit (PDU) session based on the first set of URSP rules obtained from the non-subscribed SNPN.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
selecting a non-subscribed stand-alone non-public network, SNPN, by a user equipment, UE, wherein the UE is enabled to access to the non-subscribed stand-alone non-public network, SNPN, using credentials from a credentials holder; registering to the non-subscribed SNPN using the credentials supplied by the credentials holder;
receiving a first set of UE Route Selection Policy, URSP, rules from the non-subscribed SNPN; and
establishing a protocol data unit, PDU, session based on the first set of URSP rules from the non-subscribed SNPN.

2. The method of Claim 1, wherein the credentials holder is a Public Land Mobile Network, PLMN.

3. The method of Claim 1, wherein the credentials holder is another SNPN.

4. The method of Claim 1, wherein the first set of URSP rules is signaled from the non-subscribed SNPN, and wherein the UE stores the first set of URSP rules.

5. The method of Claim 1, further comprising:
maintaining a second set of URSP rules from a home network, wherein the home network is the credential holders and is a Public Land Mobile Network, PLMN, or another SNPN.

6. The method of Claim 5, wherein the UE prioritizes the first set of URSP rules over the second set of URSP rules when establishing the PDU session.

7. The method of Claim 5, wherein the second set of URSP rules is pre-configured by the home network holding the credentials.

8. The method of Claim 5, wherein the second set of URSP rules is signaled from the home network holding the credentials when the UE was registered in the home network holding the credentials.

9. A User Equipment, UE, comprising:
a control circuit that is configured to select a non-subscribed stand-alone non-public network, SNPN, wherein the UE is enabled to access to the non-subscribed stand-alone non-public network, SNPN, using credentials from a credentials holder;
a registration handling circuit that is configured to register to the non-subscribed SNPN using the credentials supplied by the credentials holder;
a receiver that is configured to receive a first set of UE Route Selection Policy, URSP, rules from the non-subscribed SNPN; and
a protocol data unit, PDU, session handling circuit that is configured to establish a PDU session based on the first set of URSP rules from the non-subscribed SNPN.

10. The UE of Claim 9, wherein the credentials holder is a Public Land Mobile Network, PLMN; or
wherein the credentials holder is another SNPN.

11. The UE of Claim 9, wherein the first set of URSP rules is signaled from the non-subscribed SNPN, and wherein the UE stores the first set of URSP rules.

12. The UE of Claim 9, wherein the UE is configured to maintain a second set of URSP rules from a home network, wherein the home network is the credentials holder and is a Public Land Mobile Network, PLMN, or another SNPN.

13. The UE of Claim 12, wherein the UE is configured to prioritize the first set of URSP rules over the second set of URSP rules when establishing the PDU session.

14. The UE of Claim 12, wherein the second set of URSP rules is pre-configured by the home network holding the credentials.

15. The UE of Claim 12, wherein the second set of URSP rules is signaled from the home network holding the credentials when the UE was registered in the home network holding the credentials.
